# EUROPEAN PATENT APPLICATION

(11) **EP 2 341 123 A1**
(43) Date of publication of application: **06.07.2011**
(21) Application number: 09179934.6
(22) Date of filing: 18.12.2009
(51) Int. Cl.: C11D 11/02, C11D 1/29

(54) **A spray-drying process**

(71) Applicant: The Procter & Gamble Company, Cincinnati, OH 45202 (US)
(72) Inventor: Cardozo, Larry Savio, Newcastle upon Tyne, NE12 8WE (GB); Tantawy, Hossam Hassan, Morpeth, Northumberland NE61 3JT (GB); Lickiss, James Robert, Morpeth, Northumberland NE65 7NS (GB); Somerville Roberts, Nigel Patrick, Newcastle upon Tyne, NE20 9AU (GB)
(74) Representative: Howard, Phillip Jan

(57) **Abstract**

The present invention relates to a process for preparing a spray-dried detergent powder comprising (i) detersive surfactant; and (ii) other detergent ingredients; wherein the process comprises the steps of: (a) forming an aqueous detergent slurry in a mixer; (b) transferring the aqueous detergent slurry from the mixer through at least one pump to a spray nozzle; (c) contacting alkoxylated anionic detersive surfactant and/or acid precursor thereof to the aqueous detergent slurry after the mixer and before the spray nozzle to form a mixture; (d) spraying the mixture through the spray nozzle into a spray-drying tower; and (e) spray-drying the mixture to form a spray-dried powder.

## Description

### FIELD OF THE INVENTION

The present invention relates to a spray-drying process.

### BACKGROUND OF THE INVENTION

Spray-drying is the standard method for manufacturing laundry detergent base powder. Typically, detergent ingredients are mixed together to form an aqueous detergent slurry in a mixer, such as a crutcher mixer. This slurry is then transferred through at least one pump to a spray nozzle, and the slurry is sprayed into a spray-drying tower, and spray-dried to form a spray-dried powder.

However, there are limitation on which detergent ingredients, and/or the combination of detergent ingredients, can be spray-dried in this manner. This is especially true for alkoxylated anionic detersive surfactants. These surfactants tend to form highly viscous phases in the crutcher mixer; such phases are extremely difficult to handle in the manufacturing plant, leading to poor mixing in the crutcher mixer.

The Inventors have found that by reducing, or even removing, alkoxylated anionic detersive surfactant from the aqueous detergent slurry formed in the crutcher mixer, and incorporating the surfactant at a later stage in the process, such as after the mixer and before the spray nozzle, the above problems are overcome.

### SUMMARY OF THE INVENTION

The process provides a process as defined by claim 1.

### DETAILED DESCRIPTION OF THE INVENTION

### Process for preparing a spray-dried detergent powder

The process for preparing a spray-dried detergent powder typically comprises the steps of: (a) forming an aqueous detergent slurry in a mixer; (b) transferring the aqueous detergent slurry from the mixer through at least one pump to a spray nozzle; (c) contacting alkoxylated anionic detersive surfactant and/or acid precursor thereof to the aqueous detergent slurry after the mixer and before the spray nozzle to form a mixture; (d) spraying the mixture through the spray nozzle into a spray-drying tower; and (e) spray-drying the mixture to form a spray-dried powder.

**Step (a):** the aqueous detergent slurry can be formed by mixing in any suitable vessel, such as mixer, in the standard manner. Suitable mixers include vertical mixers, slurry mixers, tank agitators, crutcher mixers and the like.

**Step (b):** the aqueous detergent slurry is transferred from the mixer through at least one pump to a spray nozzle. Typically, the aqueous detergent slurry is transferred in a pipe. The aqueous slurry is typically transferred though an intermediate storage vessel such as a drop tank, for example when the process is semi-continuous. Alternatively, the process can be a continuous process, in which case no intermediate storage vessel is required. The aqueous detergent slurry is transferred through at least one pump, preferably at least two, or even at least three or more pumps, although one or two, preferably two pumps may be preferred. Typically, when two or more pumps are used, the first pump is a low pressure pump, such as a pump that is capable of generating a pressure of from 3x10⁵ to 1x10⁶ Pa, and the second pump is a high pressure pump, such as a pump that is capable of generating a pressure of from 2x10⁶ to 1x10⁷ Pa. Optionally, the aqueous detergent slurry is transferred through a disintegrator, such as disintegrators supplied by Hosakawa Micron. The disintegrator can be position before the pump, or after the pump. If two or more pumps are present, then the disintegrator can also be positioned between the pumps. Typically, the pumps, disintegrators, intermediate storage vessels, if present, are all in series configuration. However, some equipment may be in a parallel configuration. A suitable spray nozzle is a Spray Systems T4 Nozzle.
**Step (c):** alkoxylated anionic detersive surfactant and/or acid precursor thereof is contacted to the aqueous detergent slurry after the mixer and before the spray nozzle to form a mixture. Preferably, the mixture formed in step (c) comprises from 20wt% to 35wt% water. Step (c) can be carried out in any position after the mixer and before the spray nozzle. However, preferably step (c) is carried out after the aqueous detergent slurry has been transferred through at least one pump, although step (c) may be carried out before the aqueous detergent slurry has been transferred through at least one pump. In a preferred embodiment, the aqueous detergent slurry is transferred through at least two pumps, and step (c) is carried out after the aqueous detergent slurry has been transferred through the first pump but before the aqueous detergent slurry enters the second pump. Preferably, during step (c) the pipe is at a pressure of from 3x10⁵ to 1x10⁶ Pa. However, it may be preferred for step (c) to be carried out immediately before the spray nozzle.

In step (c), it may be preferred that additionally sodium chloride is contacted to the aqueous detergent slurry after the mixer and before the spray nozzle.

**Step (d):** the mixture formed in step (c) is sprayed through the spray nozzle into a spray-drying tower. Preferably, the mixture is at a temperature of from 60°C to 130°C when it is sprayed through the spray nozzle into a spray-drying tower. Suitable spray-drying towers are cocurrent or counter-current spray-drying towers. The mixture is typically sprayed at a pressure of from 6x10⁶ Pa to 1x10⁷ Pa.

**Step (e):** the mixture is spray-dried to form a spray-dried powder. Preferably, the exhaust air temperature is in the range of from 60°C to 100°C.

### Spray-dried detergent powder

The spray-dried detergent powder typically comprises: (i) detersive surfactant; and (ii) other detergent ingredients. Highly preferably, the spray-dried detergent powder comprises: (a) from 0wt% to 10wt% zeolite builder; (b) from 0wt% to 10wt% phosphate builder; and (c) optionally from 0wt% to 15wt% silicate salt. Most preferably, the spray-dried detergent powder comprises from 8wt% to 20wt% alkoxylated anionic detersive surfactant.

The spray-dried detergent powder is suitable for any detergent application, for example: laundry, including automatic washing machine laundering and hand laundering, and even bleach and laundry additives; hard surface cleaning; dish washing, especially automatic dish washing; carpet cleaning and freshening. However, highly preferably, the spray-dried detergent powder is a spray-dried laundry detergent powder.

The spray-dried detergent powder can be a fully formulated detergent product, such as a fully formulated laundry detergent product, or it can be combined with other particles to form a fully formulated detergent product, such as a fully formulated laundry detergent product. The spray-dried laundry detergent particles may be combined with other particles such as: enzyme particles; perfume particles including agglomerates or extrudates of perfume microcapsules, and perfume encapsulates such as starch encapsulated perfume accord particles; surfactant particles, such as non-ionic detersive surfactant particles including agglomerates or extrudates, anionic detersive surfactant particles including agglomerates and extrudates, and cationic detersive surfactant particles including agglomerates and extrudates; polymer particles including soil release polymer particles, cellulosic polymer particles; filler particles including sulphate salt particles, especially sodium sulphate particles; buffer particles including carbonate salt and/or silicate salt particles, preferably a particle comprising carbonate salt and silicate salt such as a sodium carbonate and sodium silicate co-particle, and particles and sodium bicarbonate; other spray-dried particles; fluorescent whitening particles; aesthetic particles such as coloured noodles or needles or lamellae particles; bleaching particles such as percarbonate particles, especially coated percarbonate particles, including carbonate and/or sulphate coated percarbonate, silicate coated percarbonate, borosilicate coated percarbonate, sodium perborate coated percarbonate; bleach catalyst particles, such as transition metal catalyst bleach particles, and imine bleach boosting particles; performed peracid particles; hueing dye particles; and any mixture thereof.

In a highly preferred embodiment of the present invention, the spray-dried detergent powder comprises: (a) from 15wt% to 30wt% detersive surfactant; (b) from 0wt% to 4wt% zeolite builder; (c) from 0wt% to 4wt% phosphate builder; and (d) optionally from 0wt% to 15wt% silicate salt, and wherein in step (c) the alkoxylated anionic detersive surfactant comprises C₈₋₁₈ alkyl ethoxylated sulphate having an average degree of ethoxylation of from 0.5 to 3 and/or acid precursor thereof.

The spray-dried powder typically comprises from 0wt% to 7wt%, preferably from 1wt% to 5wt%, and preferably from 2wt% to 3wt% water.

The spray-dried particle is typically flowable, typically having a cake strength of from 0 N to 20 N, preferably from 0 N to 15 N, more preferably from 0 N to 10 N, most preferably from 0 N to 5 N. The method to determine the cake strength is described in more detail elsewhere in the description.

### Method for measuring cake strength

A smooth plastic cylinder of internal diameter 6.35 cm and length 15.9 cm is supported on a suitable base plate. A 0.65 cm hole is drilled through the cylinder with the centre of the hole being 9.2cm from the end opposite the base plate.

A metal pin is inserted through the hole and a smooth plastic sleeve of internal diameter 6.35cm and length 15.25 cm is placed around the inner cylinder such that the sleeve can move freely up and down the cylinder and comes to rest on the metal pin. The space inside the sleeve is then filled (without tapping or excessive vibration) with the spray-dried powder such that the spray-dried powder is level with the top of the sleeve. A lid is placed on top of the sleeve and a 5 kg weight placed on the lid. The pin is then pulled out and the spray-dried powder is allowed to compact for 2 minutes. After 2 minutes the weight is removed, the sleeve is lowered to expose the powder cake with the lid remaining on top of the powder.

A metal probe is then lowered at 54 cm/min such that it contacts the centre of the lid and breaks the cake. The maximum force required to break the cake is recorded and is the result of the test. A cake strength of 0 N refers to the situation where no cake is formed.

### Aqueous detergent slurry

The aqueous detergent slurry typically comprises detergent ingredients, such as alkalinity source, polymer, builder, detersive surfactant, filler salts and mixtures thereof. However, it may be especially preferred for the aqueous detergent slurry to comprise low levels, or even be free, of detersive surfactant. Preferably, the aqueous detergent slurry comprises from 0wt%, or from above 0wt%, and to 10.2wt%, preferably to 9wt%, or to 8wt%, or to 7wt%, or to 6wt%, or to 5wt%, or to 4wt%, or to 3wt%, or to 2wt%, or to 1wt% detersive surfactant. It may even be preferred for the aqueous detergent slurry to be essentially free of detersive surfactant. By essentially free of it is typically meant herein to mean: "comprises no deliberately added".

It may be highly advantageous for the aqueous detergent slurry to comprise low levels, or even be completely free, of detersive surfactants that are difficult to process when in slurry form and exposed to the residence time and process conditions typically experienced by an aqueous detergent slurry during a conventional spray-drying process, for example in the mixer of step (a), such as a crutcher mixer. Such detersive surfactants include alkoxylated anionic detersive surfactants which have a tendency to form an undesirable phase when incorporated into an aqueous detergent slurry and exposed to pro-longed residence times. Preferably, the aqueous detergent slurry formed in step (a) comprises from 0wt% to 2wt%, preferably to 1wt% alkoxylated anionic detersive surfactant. Preferably, the aqueous detergent slurry formed in step (a) is essentially free from alkoxylated anionic detersive surfactant. By essentially free from, it is typically meant herein to mean: "comprises no deliberately added".

It may also be especially preferred for the aqueous detergent slurry to comprise low levels, or even be free, of builder.

Preferably, the aqueous detergent slurry comprises from 0wt% to 10wt%, or to 9wt%, or to 8wt%, or to 7wt%, or to 6wt%, or to 5wt%, or to 4wt%, or to 3wt%, or to 2wt%,or to 1wt% zeolite builder. Preferably, the aqueous detergent slurry is essentially free of zeolite builder.

Preferably, the aqueous detergent slurry comprises from 0wt% to 10wt%, or to 9wt%, or to 8wt%, or to 7wt%, or to 6wt%, or to 5wt%, or to 4wt%, or to 3wt%, or to 2wt%,or to 1wt% phosphate builder. Preferably, the aqueous detergent slurry is essentially free of phosphate builder.

Preferably the aqueous detergent slurry is alkaline. Preferably, the aqueous detergent slurry has a pH of greater than 7.0, preferably greater than 7.7, or greater than 8.1, or even greater than 8.5, or greater than 9.0, or greater than 9.5, or greater than 10.0, or even greater than 10.5, and preferably to 14, or to 13, or to 12.

### Detersive surfactant

Suitable detersive surfactants include anionic detersive surfactants, non-ionic detersive surfactant, cationic detersive surfactants, zwitterionic detersive surfactants and amphoteric detersive surfactants.

Preferred anionic detersive surfactants include sulphate and sulphonate detersive surfactants.

Preferred sulphonate detersive surfactants include alkyl benzene sulphonate, preferably C₁₀₋₁₃alkyl benzene sulphonate. Suitable alkyl benzene sulphonate (LAS) is obtainable, preferably obtained, by sulphonating commercially available linear alkyl benzene (LAB); suitable LAB includes low 2-phenyl LAB, such as those supplied by Sasol under the tradename Isochem® or those supplied by Petresa under the tradename Petrelab®, other suitable LAB include high 2-phenyl LAB, such as those supplied by Sasol under the tradename Hyblene®. A suitable anionic detersive surfactant is alkyl benzene sulphonate that is obtained by DETAL catalyzed process, although other synthesis routes, such as HF, may also be suitable.

Preferred sulphate detersive surfactants include alkyl sulphate, preferably C₈₋₁₈ alkyl sulphate, or predominantly C₁₂ alkyl sulphate.

Another preferred sulphate detersive surfactant is alkyl alkoxylated sulphate, preferably alkyl ethoxylated sulphate, preferably a C₈₋₁₈ alkyl alkoxylated sulphate, preferably a C₈₋₁₈ alkyl ethoxylated sulphate, preferably the alkyl alkoxylated sulphate has an average degree of alkoxylation of from 0.5 to 20, preferably from 0.5 to 10, preferably the alkyl alkoxylated sulphate is a C₈₋₁₈ alkyl ethoxylated sulphate having an average degree of ethoxylation of from 0.5 to 10, preferably from 0.5 to 7, more preferably from 0.5 to 5 and most preferably from 0.5 to 3.

The alkyl sulphate, alkyl alkoxylated sulphate and alkyl benzene sulphonates may be linear or branched, substituted or un-substituted.

The detersive surfactant may be a mid-chain branched detersive surfactant, preferably a mid-chain branched anionic detersive surfactant, more preferably a mid-chain branched alkyl sulphate and/or a mid-chain branched alkyl benzene sulphonate, most preferably a mid-chain branched alkyl sulphate. Preferably, the mid-chain branches are C₁₋₄ alkyl groups, preferably methyl and/or ethyl groups.

Suitable non-ionic detersive surfactants are selected from the group consisting of: C₈-C₁₈ alkyl ethoxylates, such as, NEODOL® non-ionic surfactants from Shell; C₆-C₁₂ alkyl phenol alkoxylates wherein preferably the alkoxylate units are ethyleneoxy units, propyleneoxy units or a mixture thereof; C₁₂-C₁₈ alcohol and C₆-C₁₂ alkyl phenol condensates with ethylene oxide/propylene oxide block polymers such as Pluronic® from BASF; C₁₄-C₂₂ mid-chain branched alcohols; C₁₄-C₂₂ mid-chain branched alkyl alkoxylates, preferably having an average degree of alkoxylation of from 1 to 30; alkylpolysaccharides, preferably alkylpolyglycosides; polyhydroxy fatty acid amides; ether capped poly(oxyalkylated) alcohol surfactants; and mixtures thereof.

Preferred non-ionic detersive surfactants are alkyl polyglucoside and/or an alkyl alkoxylated alcohol.

Preferred non-ionic detersive surfactants include alkyl alkoxylated alcohols, preferably C₈₋₁₈ alkyl alkoxylated alcohol, preferably a C₈₋₁₈ alkyl ethoxylated alcohol, preferably the alkyl alkoxylated alcohol has an average degree of alkoxylation of from 1 to 50, preferably from 1 to 30, or from 1 to 20, or from 1 to 10, preferably the alkyl alkoxylated alcohol is a C₈₋₁₈ alkyl ethoxylated alcohol having an average degree of ethoxylation of from 1 to 10, preferably from 1 to 7, more preferably from 1 to 5 and most preferably from 3 to 7. The alkyl alkoxylated alcohol can be linear or branched, and substituted or un-substituted.

Suitable cationic detersive surfactants include alkyl pyridinium compounds, alkyl quaternary ammonium compounds, alkyl quaternary phosphonium compounds, alkyl ternary sulphonium compounds, and mixtures thereof.

Preferred cationic detersive surfactants are quaternary ammonium compounds having the general formula:

(R)(R₁)(R₂)(R₃)N⁺ X

wherein, R is a linear or branched, substituted or unsubstituted C₆₋₁₈ alkyl or alkenyl moiety, R₁ and R₂ are independently selected from methyl or ethyl moieties, R₃ is a hydroxyl, hydroxymethyl or a hydroxyethyl moiety, X is an anion which provides charge neutrality, preferred anions include: halides, preferably chloride; sulphate; and sulphonate. Preferred cationic detersive surfactants are mono-C₆₋₁₈ alkyl mono-hydroxyethyl di-methyl quaternary ammonium chlorides. Highly preferred cationic detersive surfactants are mono-C₈₋₁₀ alkyl mono-hydroxyethyl di-methyl quaternary ammonium chloride, mono-C₁₀₋₁₂ alkyl mono-hydroxyethyl di-methyl quaternary ammonium chloride and mono-C₁₀ alkyl mono-hydroxyethyl di-methyl quaternary ammonium chloride.

### Alkoxylated anionic detersive surfactant and/or acid precursor thereof

In step (c) of the process, alkoxylated anionic detersive surfactant and/or acid precursor thereof is contacted to the aqueous detergent slurry. Preferably, in step (c) the alkoxylated anionic detersive surfactant comprises alkyl ethoxylated sulphate and/or acid precursor thereof. Preferably, in step (c) the alkoxylated anionic detersive surfactant comprises C₈₋₁₈ alkyl ethoxylated sulphate having an average degree of ethoxylation of from 0.5 to 20, preferably to 10, or to 5, preferably from 0.5 to 3 and/or acid precursor thereof. It may be preferred that in step (c) the alkoxylated anionic detersive surfactant comprises acid precursor of an alkyl ethoxylated sulphate.

### Zeolite builder

Suitable zeolite builder includes include zeolite A, zeolite P and zeolite MAP. Especially suitable is zeolite 4A.

### Phosphate builder

A typical phosphate builder is sodium tri-polyphosphate.

### Silicate salt

A suitable silicate salt is sodium silicate, preferably 1.6R and/or 2.0R sodium silicate.

### Other detergent ingredients

The composition typically comprises other detergent ingredients. Suitable detergent ingredients include: transition metal catalysts; imine bleach boosters; enzymes such as amylases, carbohydrases, cellulases, laccases, lipases, bleaching enzymes such as oxidases and peroxidases, proteases, pectate lyases and mannanases; source of peroxygen such as percarbonate salts and/or perborate salts, preferred is sodium percarbonate, the source of peroxygen is preferably at least partially coated, preferably completely coated, by a coating ingredient such as a carbonate salt, a sulphate salt, a silicate salt, borosilicate, or mixtures, including mixed salts, thereof; bleach activator such as tetraacetyl ethylene diamine, oxybenzene sulphonate bleach activators such as nonanoyl oxybenzene sulphonate, caprolactam bleach activators, imide bleach activators such as N-nonanoyl-N-methyl acetamide, preformed peracids such as N,N-pthaloylamino peroxycaproic acid, nonylamido peroxyadipic acid or dibenzoyl peroxide; suds suppressing systems such as silicone based suds suppressors and/or fatty acid based suds suppressors; brighteners; hueing agents; photobleach; fabric-softening agents such as clay, silicone and/or quaternary ammonium compounds; flocculants such as polyethylene oxide; dye transfer inhibitors such as polyvinylpyrrolidone, poly 4-vinylpyridine N-oxide and/or co-polymer of vinylpyrrolidone and vinylimidazole; fabric integrity components such as oligomers produced by the condensation of imidazole and epichlorhydrin; soil dispersants and soil anti-redeposition aids such as alkoxylated polyamines and ethoxylated ethyleneimine polymers; anti-redeposition components such as polyesters and/or terephthalate polymers, polyethylene glycol including polyethylene glycol substituted with vinyl alcohol and/or vinyl acetate pendant groups; perfumes such as perfume microcapsules, polymer assisted perfume delivery systems including Schiff base perfume/polymer complexes, starch encapsulated perfume accords; soap rings; aesthetic particles including coloured noodles and/or needles; dyes; fillers such as sodium sulphate, although it may be preferred for the composition to be substantially free of fillers; carbonate salt including sodium carbonate and/or sodium bicarbonate; silicate salt such as sodium silicate, including 1.6R and 2.0R sodium silicate, or sodium metasilicate; co-polyesters of di-carboxylic acids and diols; cellulosic polymers such as methyl cellulose, carboxymethyl cellulose, hydroxyethoxycellulose, or other alkyl or alkylalkoxy cellulose, and hydrophobically modified cellulose; carboxylic acid and/or salts thereof, including citric acid and/or sodium citrate; and any combination thereof.

### EXAMPLES

### Example 1. A spray-dried laundry detergent powder and process of making it.

### Aqueous alkaline slurry composition.

| **Component** | **Aqueous slurry (parts)** |
|---|---|
| Sodium Silicate | 8.5 |
| Acrylate/maleate copolymer | 3.2 |
| Hydroxyethane di(methylene phosphonic acid) | 0.6 |
| Sodium carbonate | 8.8 |
| Sodium sulphate | 42.9 |
| Water | 19.7 |
| Miscellaneous, such as magnesium sulphate, and one or more stabilizers | 1.7 |
| **Aqueous alkaline slurry parts** | **85.4** |

### Preparation of a spray-dried laundry detergent powder.

An alkaline aqueous slurry having the composition as described above is prepared in a slurry making vessel (crutcher). The alkaline aqueous slurry is shear thinning and has a viscosity in the range of from 0.5 to 30 Pas at a temperature of 70°C and at a shear rate of 50s⁻¹. The moisture content of the above slurry is 23.1 %. Any ingredient added above in liquid form is heated to 70°C, such that the aqueous slurry is never at a temperature below 70°C. Saturated steam at a pressure of 6.0x10⁵ Pa is injected into the crutcher to raise the temperature to 90°C. The slurry is then pumped into a low pressure line (having a pressure of 5.0x10⁵ Pa).
Separately, 1.14 parts of ethoxylated C₁₂₋₁₈ alkyl alcohol sulphate anionic detersive surfactant having an average degree of ethoxylation of 1 (AE₁S), 10.26 parts of C₈-C₂₄ alkyl benzene sulphonic acid (HLAS), and 3.2 parts of a 50w/w% aqueous sodium hydroxide solution are pumped into the low pressure line. The viscosity of the alkaline slurry increases. The resultant mixture is then pumped by a high pressure pump into a high pressure line (having an exit pressure of 8.0x10⁶ Pa). The mixture is then sprayed at a rate of 1,640kg/hour at a pressure of 8.0x10⁶ Pa and at a temperature of 90°C +/-2°C through a spray pressure nozzle into a counter current spray-drying tower with an air inlet temperature of 300°C. The mixture is atomised and the atomised slurry is dried to produce a solid mixture, which is then cooled and sieved to remove oversize material (>1.8mm) to form a spray-dried powder, which is free-flowing. Fine material (<0.15mm) is elutriated with the exhaust the exhaust air in the spray-drying tower and collected in a post tower containment system. The spray-dried powder has a moisture content of 2.5wt%, a bulk density of 510 g/l and a particle size distribution such that greater than 80wt% of the spray-dried powder has a particle size of from 150 to 710 micrometers. The composition of the spray-dried powder is given below.

### Spray-dried laundry detergent powder composition

| **Component** | **%w/w Spray Dried Powder** |
|---|---|
| Ethoxylated C₁₂₋₁₈ alkyl alcohol sulphate anionic detersive surfactant having an average degree of ethoxylation of 1 (AE₁S) | 1.5 |
| Sodium silicate salt | 10.0 |
| C₈-C₂₄ alkyl benzene sulphonate | 13.6 |
| Acrylate/maleate copolymer | 4.0 |
| Hydroxyethane di(methylene phosphonic acid) | 0.7 |
| Sodium carbonate | 11.9 |
| Sodium sulphate | 53.7 |
| Water | 2.5 |
| Miscellaneous, such as magnesium sulphate, and one or more stabilizers | 2.1 |
| **Total Parts** | **100.00** |

### A granular laundry detergent composition.

| **Component** | **%w/w granular laundry detergent composition** |
|---|---|
| Spray-dried powder of example 1 (described above) | 59.38 |
| 91.6wt% active linear alkyl benzene sulphonate flake supplied by Stepan under the tradename Nacconol 90G^{®} | 0.22 |
| Citric acid | 5.00 |
| Sodium percarbonate (having from 12% to 15% active AvOx) | 14.70 |
| Photobleach particle | 0.01 |
| Lipase (11.00mg active/g) | 0.70 |
| Amylase (21.55mg active/g) | 0.33 |
| Protease (56.00mg active/g) | 0.43 |
| Tetraacetyl ethylene diamine agglomerate (92wt% active) | 4.35 |
| Suds suppressor agglomerate (11.5wt% active) | 0.87 |
| Acrylate/maleate copolymer particle (95.7wt% active) | 0.29 |
| Green/Blue carbonate speckle | 0.50 |
| Sodium Sulphate | 9.59 |
| Solid perfume particle | 0.63 |
| Ethoxylated C₁₂-C₁₈ alcohol having an average degree of ethoxylation of 7 (AE7) | 3.00 |
| **Total Parts** | **100.00** |

The above laundry detergent composition was prepared by dry-mixing all of the above particles (all except the AE7) in a standard batch mixer. The AE7 in liquid form is sprayed on the particles in the standard batch mixer. Alternatively, the AE7 in liquid form is sprayed onto the spray-dried powder of example 1. The resultant powder is then mixed with all of the other particles in a standard batch mixer.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. A process for preparing a spray-dried detergent powder comprising
(i) detersive surfactant; and
(ii) other detergent ingredients;
wherein the process comprises the steps of:
(a) forming an aqueous detergent slurry in a mixer;
(b) transferring the aqueous detergent slurry from the mixer through at least one pump to a spray nozzle;
(c) contacting alkoxylated anionic detersive surfactant and/or acid precursor thereof to the aqueous detergent slurry after the mixer and before the spray nozzle to form a mixture;
(d) spraying the mixture through the spray nozzle into a spray-drying tower; and
(e) spray-drying the mixture to form a spray-dried powder.

2. A process according to claim 1, wherein in step (c) the alkoxylated anionic detersive surfactant comprises alkyl ethoxylated sulphate and/or acid precursor thereof.

3. A process according to any preceding claim, wherein in step (c) the alkoxylated anionic detersive surfactant comprises C₈₋₁₈ alkyl ethoxylated sulphate having an average degree of ethoxylation of from 0.5 to 3 and/or acid precursor thereof.

4. A process according to any preceding claim, wherein in step (c) the alkoxylated anionic detersive surfactant comprises acid precursor of an alkyl ethoxylated sulphate.

5. A process according to any preceding claim, wherein in step (c) additionally sodium chloride is contacted to the aqueous detergent slurry after the mixer and before the spray nozzle.

6. A process according to any preceding claim, wherein the aqueous detergent slurry comprises from 0wt% to 5wt% detersive surfactant.

7. A process according to any preceding claim, wherein the spray-dried detergent powder comprises:
(a) from 0wt% to 10wt% zeolite builder;
(b) from 0wt% to 10wt% phosphate builder; and
(c) optionally from 0wt% to 15wt% silicate salt.

8. A process according to any preceding claim, wherein the aqueous detergent slurry formed in step (a) comprises from 0wt% to 2wt% alkoxylated anionic detersive surfactant.

9. A process according to any preceding claim, wherein the spray-dried detergent powder comprises from 8wt% to 20wt% alkoxylated anionic detersive surfactant.

10. A process according to any preceding claim, wherein in step (d) the mixture is at a temperature of from 60°C to 130°C when it is sprayed through the spray nozzle into a spray-drying tower.

11. A process according to any preceding claim, wherein the mixture formed in step (c) comprises from 20wt% to 35wt% water.

12. A process according to any preceding claim, wherein the spray-dried detergent powder is spray-dried laundry detergent powder.

13. A process according to any preceding claim, wherein the spray-dried detergent powder comprises
(a) from 15wt% to 30wt% detersive surfactant;
(b) from 0wt% to 4wt% zeolite builder;
(c) from 0wt% to 4wt% phosphate builder; and
(d) optionally from 0wt% to 15wt% silicate salt,
wherein in step (c) the alkoxylated anionic detersive surfactant comprises C₈₋₁₈ alkyl ethoxylated sulphate having an average degree of ethoxylation of from 0.5 to 3 and/or acid precursor thereof.
